# EUROPEAN PATENT APPLICATION

(11) **EP 4 343 034 A2**
(43) Date of publication of application: **27.03.2024**
(21) Application number: 23195116.1
(22) Date of filing: 04.09.2023
(51) Int. Cl.: C25B 3/26, C25B 11/052, C25B 11/065, C25B 11/081, C25B 11/091, C25B 11/095

(54) **CARBON SUPPORTED CARBOXYL FUNCTIONALIZED SILVER NANOPARTICLES FOR GAS DIFFUSION ELECTRODES**

(30) Priority: 22.09.2022 US 202217934565
(71) Applicant: Xerox Corporation, Webster, NY 14580 (US)
(72) Inventor: ZHU, Yujie, Mississauga, L5B 3YZ (CA); WANG, Yulin, Oakville, L6H 0C6 (CA); CLARIDGE, Robert, Cambridge, N3C 3K9 (CA); ZWARTZ, Edward G., Mississauga, L5J 4B2 (CA); Kurt I., HALFYARD, Mississauga, L5M 6K7 (CA); LAWTON, David, Burlington, L7M 3N5 (CA)
(74) Representative: Grünecker Patent- und Rechtsanwälte PartG mbB

(57) **Abstract**

A composition, a gas diffusion electrode, and a method for fabricating the same is disclosed. In an example, the composition includes c carbon supported carboxyl surface functionalized silver nanoparticles. The gas diffusion electrode can be fabricated with the carbon supported carboxyl surface functionalized silver nanoparticles and deployed in a membrane electrode assembly for various applications.

## Description

The present disclosure relates generally to membrane electrode assemblies and relates more particularly to gas diffusion electrodes with carbon supported carboxyl functionalized silver nanoparticles used in various conversion systems.

### BACKGROUND

The emission of greenhouse gases (GHGs) like carbon dioxide (CO₂) is causing depletion of the earth's ozone layer and the global temperature increase, leading to adverse effects on human health, agriculture, and water resources. To mitigate global climate change, worldwide interest has been focused on the field of CO₂ capture and utilization (CCU), where electro-catalytic conversion of CO₂ into value-added chemicals and synthetic fuels is one of the attractive approaches. With appropriate electro-catalysts and reaction conditions including overpotential, reaction temperature, and electrolyte, etc., CO₂ can be electrochemically converted into various products such as carbon monoxide (CO), methane (CH₄), ethylene (C₂H₄), formic acid (HCOOH), methanol (CHsOH) and ethanol (C₂H₅OH), etc.

At the current stage, electrochemical conversion of CO₂ into CO is one of the most promising reactions, due to its high technological and economic feasibility. In this reaction, syngas (CO and H₂) can be generated in an energy-efficient way and then used as feedstocks to produce synthetic hydrocarbons via a Fischer-Tropsch synthesis process.

### SUMMARY

According to aspects illustrated herein, there is provided a composition, an electrode, and a method for fabricating the electrode for a membrane electrode assembly. One disclosed feature of the embodiments is a composition comprising carbon supported carboxyl surface functionalized silver nanoparticles.

Another disclosed feature of the embodiments is a method comprising preparing an ink comprising carbon supported carboxyl surface functionalized silver nanoparticles and depositing the ink on an electrically conductive surface.

Another disclosed feature of the embodiments is an electrode. The electrode comprises an electrically conductive surface and carbon supported carboxyl surface functionalized silver nanoparticles on the electrically conductive surface.

### BRIEF DESCRIPTION OF THE DRAWINGS

The teaching of the present disclosure can be readily understood by considering the following detailed description in conjunction with the accompanying drawings, in which:
FIG. 1 illustrates an exploded block diagram of an example membrane electrode assembly with a gas diffusion electrode of the present disclosure;
FIG. 2 illustrates a block diagram of an example printer used to spray surface functionalized silver nanoparticle carbon particles onto a carbon substrate to fabricate the gas diffusion electrode of the present disclosure;
FIG. 3 illustrates a flowchart of an example method for fabricating a gas diffusion electrode of the present disclosure;
FIG. 4 illustrates SEM and TEM images of both functionalized and non-functionalized microporous carbon structures impregnated with organo-functionalized silver nanoparticles;
FIG. 5 illustrates a graph of Faradaic efficiency versus cell potential for various surface functionalized silver nanoparticle carbon particles;
FIG. 6 illustrates energetic efficiency versus cell potential for various surface functionalized silver nanoparticle carbon particles;
FIG. 7 illustrates current density versus cell potential for various surface functionalized silver nanoparticle carbon particles; and
FIG. 8 illustrates single pass conversion rates versus cell potential for various surface functionalized silver nanoparticle carbon particles.

To facilitate understanding, identical reference numerals have been used, where possible, to designate identical elements that are common to the figures.

### DETAILED DESCRIPTION

The present disclosure broadly discloses carbon supported thiol and carboxyl surface functionalized silver nanoparticles. The present disclosure also broadly discloses an example gas diffusion electrode with carbon supported surface functionalized silver nanoparticles impregnated via an ex-situ process and a method for fabricating the same. As discussed above, there is worldwide interest in CCU using electro-catalytic conversion of CO₂ into value-added chemicals and synthetic fuels.

The key to the electrochemical conversion process is the electro-catalysts with high efficiency and selectivity, as well as long-term stability. Recent years have witnessed significant advances in the development of electro-catalysts that can selectively reduce CO₂ to CO, including Au, Ag, Zn, Pd, and Ga, etc. Among all the candidates, silver shows the highest potential for large-scale applications, owning to its moderate cost and high catalytic selectivity for CO production. Despite the extensive study on Ag-based electro-catalysts, challenges remain in developing materials with enhanced catalytic selectivity at reduced overpotentials in a simple, scalable, and cost-efficient way.

The present disclosure uses carbon supported surface functionalized silver nanoparticles that are formed by depositing surface functionalized silver nanoparticles formed ex-situ onto a surface of a carbon support or structure. For example, the silver nanoparticles may be surface functionalized in isolation away from the carbon structure before being added onto the surface of the carbon structure. In other words, the fully synthesized silver nanoparticles are removed from the liquid-containing composition that the surface functionalized silver nanoparticles were formed in and then added to the carbon structure. In some embodiments, the carbon structure may be microporous or non-porous. The microporous carbon structure may be impregnated with surface functionalized silver nanoparticles that are formed ex-situ as the electro-catalysts in the gas diffusion electrode for electro-catalytic conversion of CO₂. The carbon supported surface functionalized silver nanoparticles may be formed ex-situ via an impregnation method.

"Carbon supported" may be defined as the surface functionalized silver nanoparticles being on the surface of the carbon structure. The carbon structure may be larger than the surface functionalized silver nanoparticles. For example, the carbon structure can be from about 50 nanometers (nm) to about 100 nm in diameter, versus the surface functionalized silver nanoparticles that can be from about 5 nm to about 20 nm in diameter. Thus, the smaller silver nanoparticles can be formed onto the surface of the carbon structure.

Nanostructured silver catalysts have shown improved performance compared to their bulk counterparts, as they offer mass-transport advantages and more highly active sites on the edges and corners of the nanomaterials. By tuning nanomaterial composition, size, morphology, porosity, and surface modification, nanostructured catalyst behaviors can be adjusted for specific applications.

Surface modification is one of the effective approaches to improve catalytic performance. Studies have suggested that functional molecules can decrease the overpotential or improve CO selectivity, e.g., amine-capped Ag nanoparticles show better catalytic performance through stabilizing the COOH* intermediate.

Integration of such electro-catalysts into the Membrane Electrode Assembly (MEA) is another key step to obtain desirable products. A typical MEA comprises two gas diffusion layers (GDLs) and an ion exchange membrane with catalyst particles dispersed at the interface, and its production is similar to the various roll-to-roll production methods utilized in printing. Despite the great effort in developing MEAs for CO₂ conversion systems, it remains challenging to fabricate MEAs with low cost, high standard performance, and tunable properties.

The present disclosure provides novel carbon supported surface functionalized silver nanoparticles and a scalable approach to prepare MEAs for electrochemical reduction using the carbon supported surface functionalized silver nanoparticles as electro-catalysts that are efficient and selective. Although the carbon structure can be non-porous, microporous carbon structures provide improved performance for MEAs. Microporous carbon structures impregnated with surface functionalized silver nanoparticles are synthesized and formulated into catalyst inks which are deposited on GDLs via continuous print/coating methods. The surface functionalized silver nanoparticle carbon particles may reduce the silver loading by up to 20 times compared to the amount of silver loading for unsupported silver nanoparticles. The fabrication of MEAs with high Faradic efficiency and selectivity for CO are demonstrated under relatively low overpotentials.

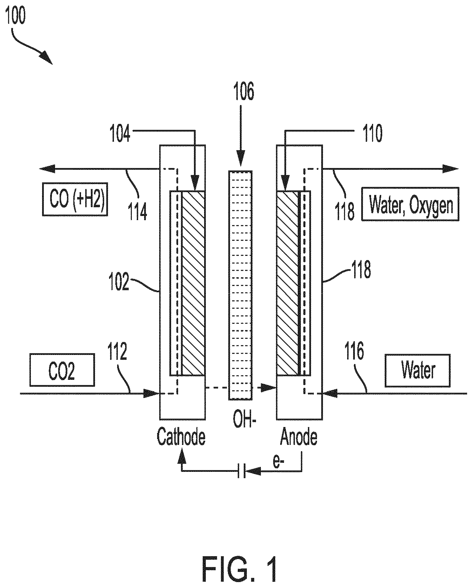

FIG. 1 illustrates an example membrane electrode assembly 100 that includes a gas diffusion electrode 104 of the present disclosure. The membrane electrode assembly 100 may be part of a flow cell electro-catalytic converter that is used to convert a compound into different desirable compounds. The gas diffusion electrode 104 of the present disclosure may provide a scalable electrode that is highly efficient at lower cell potentials (e.g., uses less power to perform the conversion).

One example conversion that can be performed by the membrane electrode assembly 100 is the conversion of carbon dioxide (CO₂) into carbon monoxide (CO) and hydrogen gas (H₂). However, it should be noted that the gas diffusion electrode 104 may be used for electro-catalytic conversion of other types of compounds within the context of flow cell electro-catalytic converters.

In one embodiment, the membrane electrode assembly 100 includes a cathode 102 having the gas diffusion electrode 104, an anion exchange membrane 106, and an anode 108 with an iridium-oxide electrode 110. In one embodiment, an inlet 112 may feed CO₂ through the cathode 104 and an outlet 114 may carry the CO and H₂ away from the cathode 104. An inlet 116 may feed water through the anode 110 and an outlet may carry water and oxygen away from the anode 108.

In one embodiment, a reference voltage 114 may be applied to assist in the conversion of the CO₂ into CO and H₂. For example a cell potential may be applied to the membrane electrode assembly 100 via the reference voltage to perform the electro-catalytic conversion. The examples discussed herein applied a cell potential or overpotential of 2.80 Volts (V) to 3.80 (V).

In one embodiment, the gas diffusion electrode 104 may be fabricated with microporous carbon structures impregnated with surface functionalized silver nanoparticles, as described herein. Details of the methods to fabricate the gas diffusion electrode 104 are discussed in further detail below. The gas diffusion electrode 104 may be fabricated by coating a carbon substrate with a catalyst ink formulated with surface functionalized silver nanoparticle carbon particles and then drying the catalyst ink. In one embodiment, the gas diffusion electrode 104 may include a gas diffusion layer for gas to diffuse through.

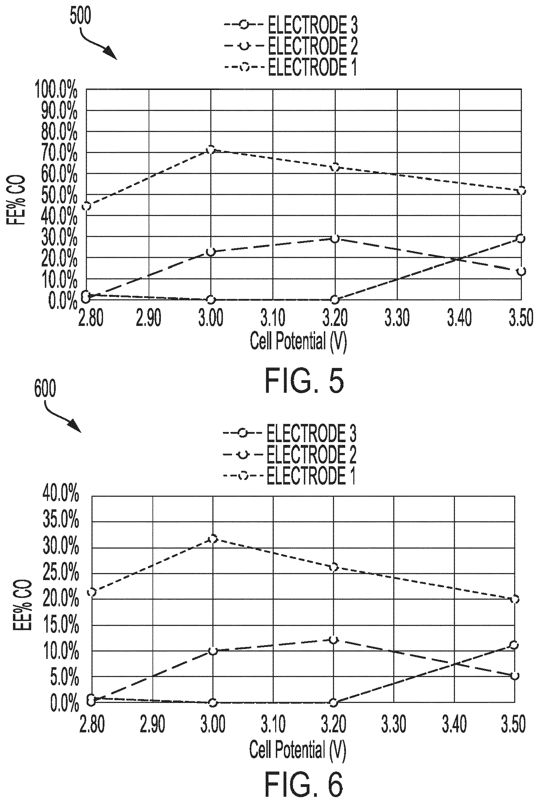

In one embodiment, the gas diffusion electrode 104 of the present disclosure may have a Faradic efficiency that is greater than 40% at overpotentials or a cell potential less than 3.50 V. The gas diffusion electrode 104 may have a single pass conversion rate of CO₂ to CO of greater than 10% at a cell potential less than 3.50V. The gas diffusion electrode 104 may have a current density of greater than 40 milliamps per square centimeter (mA/cm²) at a cell potential between 3.00 V to 3.50 V. The gas diffusion electrode 104 may have an energetic efficiency of greater than 30% at a cell potential of 3.00 V. A comparison of the various performance parameters of the gas diffusion electrode 104 with and without impregnated microporous carbon structures is illustrated in FIGs. 5-8 and discussed in further detail below with reference to examples provided herein.

In one embodiment, the ion exchange member 106 may be a Dioxide Materials Sustainion X37-50-RT activated with potassium hydroxide (KOH) and rinsed with deionized water. The anode 110 may be an iridium oxide (IrO₂) coated carbon substrate with the catalyst facing up or towards the ion exchange member 106.

In one embodiment, the anolyte may be potassium bicarbonate (KHCOs). The catholyte flow chamber may capture the CO and H₂ converted from the CO₂ provided by the carbon dioxide flow chamber 102. As noted above, the membrane electrode assembly may be used in a flow cell electro-catalytic converter system. Although various examples are were provided for the anolyte, the anode 110, and the ion exchange membrane 106, it should be noted that other materials may be deployed.

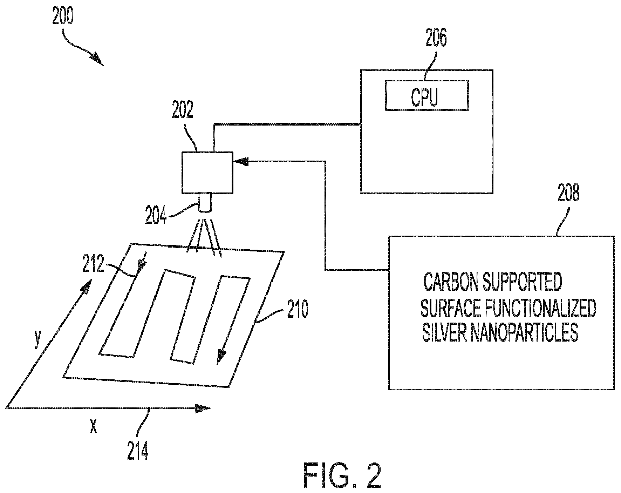

FIG. 2 illustrates a block diagram of an example printer 200 that can be used to spray carbon supported surface functionalized silver nanoparticles 208 that are prepared for fabrication of the gas diffusion electrode 104.

In one embodiment, the carbon supported surface functionalized silver nanoparticles 208 may be prepared by mixing silver nitrate with a single functional ligand comprising a carboxyl containing moiety and a thiol moiety or two separate functional ligands that include a first functional ligand having a carboxyl containing moiety and a second functional ligand having a thiol containing moiety. The carboxyl moiety can attach the surface of the silver particles with help from the thiol moiety.

In one embodiment, a ligand may be defined as a molecule that binds to a central metal atom to form a coordination complex. A ligand may enable the colloidal stability of nanoparticles via electrostatic and/or steric interactions.

In one embodiment, the carboxyl moiety and the thiol moiety may be provided as a single functional ligand. Examples of the single functional ligand may include any mercapto carboxylic acid (e.g., mercaptopropionic acid, 2-mercaptoethanol, 2-mercaptoethylacetate, 6-mercaptohexionicacid, 10 mercaptodecionic acid, and the like), methyl thioglycolate, cysteine, cystamine, and the like. In one embodiment, the single functional ligand that includes the carboxyl moiety and the thiol moiety may be mercaptosuccinic acid.

In one embodiment, the carboxyl containing moiety and the thiol containing moiety may come from two separate functional ligands. For example, the first functional ligand may be any type of ligand that includes the carboxyl moiety and the second functional ligand may be any type of ligand that includes the thiol moiety.

In an example process, the thiol containing moiety and the carboxyl containing moiety may be dissolved in ethanol, or another lower alcohol/compatible solvent. A reducing agent (e.g., sodiumborohydride, tannic acid, ascorbic acid, and the like) may be added. A silver salt (e.g., silver acetate or silver nitrate) may be added slowly while stirring the reaction mixture and cooling the vessel due to the exothermic reactions.

Examples of a separate carboxyl containing moiety may include carboxylic acid, dicarboxylic acids (e.g., succinic acid, glutaric acid, and the like), tricarboxylic acids (e.g., citrate acid, citric acid, and the like), amino acids (e.g., glycine, glutamic acid, aspartic acid, arginine, and the like), aminobutyric acid, alanine, and the like. Examples of separate thiol containing moieties may include alkylthiols (e.g., 1-butanethiol, 1-hexanethiol, 1-octanethiol, cyclohexanethiol, and the like), 3-(trimethoxysilyl)-1-propeanethiol, tert-dodecylmercaptan, 1-adamantanethiol, triphenylmethanethiol, benzyl mercaptan, 2-mercaptobenzothiazole, and the like.

In an example, the thiol containing moiety may be 1-butanethiol (0.5 equivalents), the carboxyl containing moiety may be citric acid (0.5 equivalents), the reducing agent may be sodiumborohydride (up to 10 equivalents) and the silver salt may be silver nitrate (1 equivalent). In an example, the thiol containing moiety may be 1-butanethiol (0.2 equivalents), the carboxyl containing moiety may be citric acid (0.8 equivalents), the reducing agent may be sodiumborohydride (up to 10 equivalents) and the silver salt may be silver nitrate (1 equivalent). In an example for larger particles, the thiol containing moiety may be 1-butanethiol (0.2 equivalents), the carboxyl containing moiety may be citric acid (0.8 equivalents), the reducing agent may be tannic acid (up to 2 equivalents) and the silver salt may be silver nitrate (1 equivalent). The concentration for the examples above may be approximately 0.01 to 0.1 moles per liter.

In one embodiment, functionalizing the silver nanoparticles may refer to changing nanomaterial properties to add certain functionality through assembling different carboxyl containing materials. In one embodiment, the thiol moiety be also referred to as a "linking moiety" and may be used to ensure attachment of the carboxyl moiety to the silver nanoparticles. In other words, the thiol moiety may promote a covalent bond between the carboxyl moiety and the surface of the silver nanoparticles.

In one embodiment, the thiol moiety may include sulfur. The sulfur may have a high affinity to silver to the point that there is a covalent bond as opposed to a simple coordination of the ligands.

In addition to improving the bond strength of the carboxyl moiety to the surface of the silver, the silver-sulfur interaction can lower the over potential for reduction of CO₂. The silver-sulfur interaction can change the electronic characteristics of the silver nanoparticles such that the silver nanoparticles are more efficient at CO₂ reduction. For example, the silver-sulfur interaction can improve or promote electron transfer during the CO₂ reduction.

In one embodiment, the thiol moiety may be part of the carboxyl containing moiety in a single functional ligand, as noted above. An example compound that includes a carboxyl moiety and the thiol moiety may be mercaptosuccinic acid. In one embodiment, the carboxyl moiety and the thiol moiety may be provided as two separate or different functional ligands.

In one embodiment, the carbon supported surface functionalized silver nanoparticles 208 may be prepared with mercaptosuccinic acid. Thus, the silver nanoparticles can be functionalized to bond with a carbon substrate by attaching mercaptosuccinic acid to the silver nanoparticles through the help of a thiol ligand. Example 1 below describes an example of the carbon supported surface functionalized silver nanoparticles 208 with dodecylamine.

### Example 1:

A 5% aqueous solution of AgNO3 (2.52 g (15 millimoles (mmol)) in 50 grams (g) water) was added to 1200 milliliters (mL) methanol (MeOH) in a 2 liter (L) round bottomed flask purged with Argon (Ar). To this was added 2.25 g (15 mmol) of mercaptosuccinic acid. The flask was placed in a RT water bath and stirred for 10 minutes. 300 mL of a freshly prepared 0.5 molar (M) aqueous sodium borohydride solution was added to the flask slowly over 5 minutes, in which the flask noticeably warmed. The solution was stirred under Ar for 50 min. The particles were collected on a Buchner funnel with whatman #4 over glass a fiber filter and washed with 50 mL of MeOH. The material was placed in vacuum oven at room temperature and -30 inches mercury (Hg) to remove excess MeOH to give black AgNP-thiol-COOH powder (2.25 g). Primary particle size was found to be approximately 10 nanometers (nm) by SEM image analysis. Due to agglomeration in solution, particle size by Electrophoretic Light Scattering (ELS) was measured to be higher, Zave: 82.7 nm, Zave (primary distribution): 116.5 nm, D(1,0): 28.4 nm.

The carbon supported surface functionalized silver nanoparticles were then used to impregnate microporous carbon structures as described by Example 2 below.

### Example 2:

105 milligrams (mg) of Vulcan XC-72R carbon black (Cabot) was dispersed in 3.5g of Ethanol, and then, the carbon black was impregnated over 48hrs with 72 mg of Ag-thiol-COOH powder dispersed in 3.5 g of Hexane. After filtration, washing with ethanol and overnight vacuum drying, a 40wt% Ag-thiol-COOH/C catalyst was obtained.

The carbon supported surface functionalized silver nanoparticles 208 may then be prepared into an ink form that can be dispensed by a printhead 202 with a spray nozzle 204 that is under the control of a central processing unit (CPU) 206 (also referred to as a processor or controller). The carbon supported surface functionalized silver nanoparticles 208 may be mixed with a polar or non-polar solvent to prepare the ink. Examples of the polar solvent may include ethanol, isopropanol, butanol, water, and the like. Examples of the non-polar solvent may include toluene, decalin, benzene, hexane, and the like. In one embodiment, several polar solvents, several non-polar solvents, or a combination of both polar solvents and non-polar solvents may be used to prepare the ink. For example, the solvent can be water and isopropyl alcohol, with a ratio from 90:10 to 10:90. In another example, the solvent may be pure isopropyl alcohol. The solid concentration of the surface functionalized silver nanoparticles 208 may range from approximately 0.1 wt% to approximately 5 wt%.

The printhead 202 may move along an x-y coordinate system 214 to distribute the carbon supported surface functionalized silver nanoparticles 208 across the surface of the substrate 210. Example 3 describes an example of how the carbon supported surface functionalized silver nanoparticles 208 are prepared into an ink form.

### Example 3:

The cathode catalyst ink was prepared by mixing 130 mg of the above 40wt% Ag-thiol-COOH/C catalyst powder with 4.3 ml of deionized water, 13 ml of isopropyl alcohol, and 700 microliters (ul) of 5 weight percent (wt%) Sustainion ionomer solution (Dioxide Materials Company). The ink was ultra-sonicated for 30 min for complete mixing. The mass ratio of silver loading was approximately 0.34%.

The carbon supported surface functionalized silver nanoparticles 208 in an ink form may then be printed onto a substrate 210. The substrate 210 may be a carbon substrate. The carbon supported surface functionalized silver nanoparticles 208 may be printed by spraying the substrate 210 with the carbon supported surface functionalized silver nanoparticles 208 in an ink form.

In one example, the carbon supported surface functionalized silver nanoparticles 208 in an ink form were spray coated with an ultrasonic spray coater with nitrogen flow gas at 34 kilopascals (kPa) at 0.17 cubic meters (m³) delivery per hour at a stand-off distance of 30 millimeters (mm) from a sonic head gas diffusion layer substrate. Sonication power was at 1.5 watts (W) and a conical vortex delivery pattern with 0.3 milliliters per minute (mL/min) ink delivery via a syringe pump. Printing was done via an X-Y ballscrew-stage with fixed Ultrasonic (e.g., Sonotek-Vortex) print head was 60 mm x 60 mm zone consisting of a serpentine path of 12 lines with a 5 mm spacing gap between them at a linear speed of 25 mm per second (mm/sec). The ink was stirred using a string bar in the syringe.

After the carbon supported surface functionalized silver nanoparticles 208 are prepared in an ink form and printed onto the substrate 210, the carbon supported surface functionalized silver nanoparticles 208 on the substrate 210 may be dried at room temperature for 24 hours.

In an example, three different gas diffusion electrodes 104 were prepared. A first electrode (electrode 1 in FIGs. 5-8) received 15 passes of the carbon supported surface functionalized silver nanoparticles 208 of the present disclosure. A second electrode (electrode 2 in FIGs. 5-8) received 15 passes of previously used commercially available carbon supported silver particles without the carboxyl moiety. A third electrode (electrode 3 in FIGs. 5-8) received 15 passes of the thiol and carboxyl surface functionalized silver nanoparticles without carbon support. FIGs. 5-8 illustrate image comparisons of the different fabricated electrodes with and the comparative performance of each electrode compared to gas diffusion electrodes fabricated with surface functionalized silver nanoparticles without using the carbon impregnation described above.

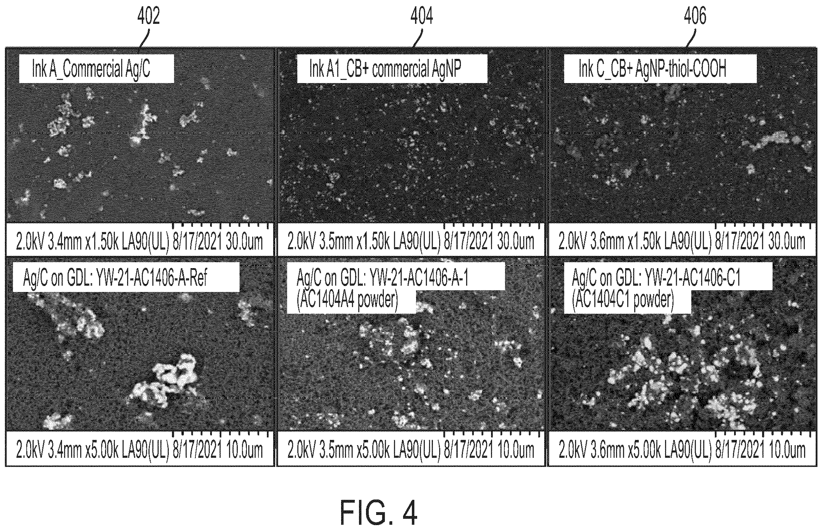

FIG. 4 illustrates scanning electron microscope (SEM) images of different types of electrodes. For example, SEM image 402 illustrates a gas diffusion electrode prepared with ink that includes commercially available carbon supported silver particles. SEM image 404 illustrates a gas diffusion electrode prepared with ink that includes carbon supported silver nanoparticles. SEM image 406 illustrates a gas diffusion electrode prepared with ink that includes the carbon supported surface functionalized silver nanoparticles of the present disclosure. The SEM image 406 appears to show a more uniform distribution and coverage compared to the SEM images 402 and 404.

FIG. 5 illustrates a graph 500 of the Faradic efficiency versus cell potential for the three example electrodes described above. As noted above, the silver loading of the electrode without the microporous carbon support structure is much higher (e.g., approximately 1.6 mg/cm²) compared to the electrode with the microporous carbon support structure (e.g., less than 0.1 mg/cm² or approximately 0.08 mg/cm²).

The Faradic efficiency is a measure of the specific electron efficiency participating in the desired electrochemical reaction. As shown in the graph 500, the Faradic selectivity towards carbon monoxide for electrode 1 were found to be much higher than electrodes 2 and 3 through testing in a voltage region between 2.8 V to 3.5 V. Electrode 1 showed a Faradic efficiency greater than 40%.

FIG. 6 illustrates a graph 600 of the energetic efficiency versus cell potential for the three example electrodes described above. The energetic efficiency is a measure of the true energy efficiency of the electrochemical conversion process. This is done by the multiplication of the Faradaic efficiency with cell overpotential, which yields the actual energy input.

The graph 600 illustrates that the energetic efficiency of electrode 1 was higher than the energetic efficiency of electrodes 2 and 3. Electrode 1 showed an energetic efficiency of greater than 30% at the cell potential of 3.0 V.

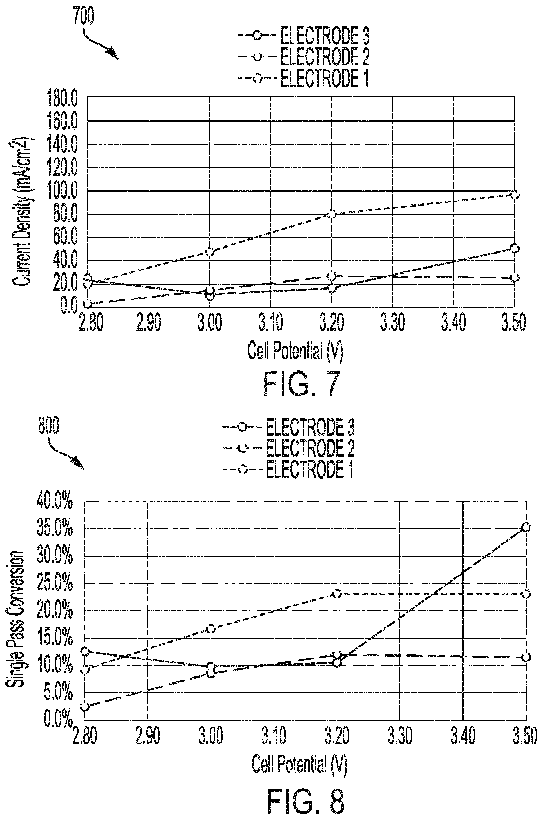

FIG. 7 illustrates a graph 700 of the current density in mA/cm² versus cell potential for the three example electrodes described above. The current density is a measure of the amount of charge able to be applied to the cell and is directly related to the maximum throughput or conversion rate. This makes the current density a critical factor when considering the scale-up economics of CO₂ electrolysis.

The graph 700 illustrated that at 3.00 V electrode 1 had the highest current density. Graph 700 illustrates that the current density improves as the voltage increases for electrode 1. Electrodes 2 and 3 did not exhibit as good a performance electrode 1. Electrode 1 showed a current density of greater than 40 mA/cm² at a cell potential between 3.00 V to 3.50 V.

FIG. 8 illustrates a graph 800 of the single pass conversion rate versus cell potential for the three example electrodes described above. The single pass conversion rate is a performance metric often related to scale-up economics of conversion systems. In this instance the outlet CO flow rate is measured and used to calculate the molar conversion percentage of the input CO₂.

The graph 800 illustrates that electrode 1 had the highest single pass conversion rate at a voltage between 3.00 V to 3.30 V. Electrode 1 showed a single pass conversion rate of greater than 10% at cell potentials between 2.9 V to 3.5 V.

Based on an evaluation of the catalytic performance characteristics of the various electrodes, it was found that the electrodes with the microporous carbon structure can provide comparable target catalytic performance to the electrode without the impregnated microporous carbon structure. For example, electrodes with the carbon supported carboxyl surface functionalized silver nanoparticles of the present disclosure can provide the same target catalytic performance level compared to another electrode having surface functionalized silver nanoparticles that are not carbon supported. In addition, the silver loading of the electrode is two times or more lower compared to another electrode having surface functionalized silver nanoparticles that are not carbon supported.

The more desirable catalytic behavior can be explained by the enhanced interaction between the silver and carbon support. To be more specific, strong acids, such as HNOs, have been reported to activate carbon surfaces, and possibly forming -COOH groups on the carbon surface. Other methods may also be used to activate the carbon surfaces to increase interaction between the silver and the carbon support. For example, other treatments can include plasma treatment, bases, or other types of chemical treatments. Silver nanoparticles have strong interactions with the carboxylic acid and carbonyl groups present on the activated carbon surfaces, leading to better electron transfer properties and, thus, better catalytic performance.

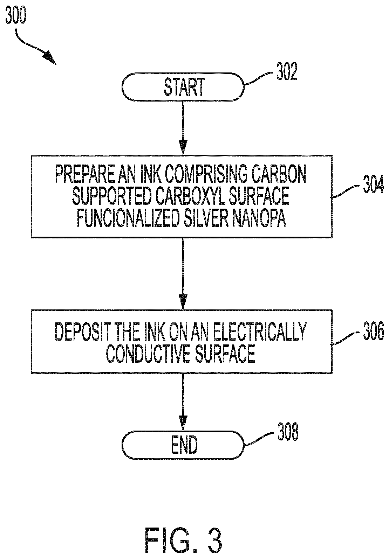

FIG. 3 illustrates a flowchart of an example method 300 for fabricating a gas diffusion electrode of the present disclosure. In one embodiment, one or more blocks of the method 300 may be performed by various tools or machines under the control of a central controller or processor (e.g., the printer 200) or in combination with manually performed steps to prepare the various compounds described herein.

At block 302, the method 300 begins. At block 304, the method 300 prepares an ink comprising carbon supported thiol and carboxyl surface functionalized silver nanoparticles. For example, the carbon supported thiol and carboxyl surface functionalized silver nanoparticles can be prepared by impregnating a microporous carbon structure with surface functionalized silver nanoparticles that are isolated away from the carbon structure during synthesis to form surface functionalized silver nanoparticle carbon particles.

In one embodiment, the silver nanoparticles may be thiol and carboxyl surface functionalized silver nanoparticles. In one embodiment, the thiol and carboxyl surface functionalized silver nanoparticles may be prepared by mixing silver nitrate with a thiol containing moiety and a carboxyl containing moiety.

In one embodiment, the thiol moiety and the carboxyl moiety may be presented as a single functional ligand. The single functional ligand may include any mercapto carboxylic acid (e.g., mercaptosuccinic acid, mercaptopropionic acid, 2-mercaptoethanol, 2-mercaptoethylacetate, 6-mercaptohexionicacid, 10 mercaptodecionic acid, and the like), methyl thioglycolate, cysteine, cystamine, and the like, all of which are described within the present disclosure above.

In one embodiment, the thiol containing moiety and the carboxyl containing moiety may be presented as separate functional ligands. For example, the first functional ligand may include the thiol moiety and the second functional ligand may include the carboxyl moiety.

In one embodiment, the thiol and carboxyl surface functionalized silver nanoparticles maybe prepared by mixing silver nitrate with mercaptosuccinic acid, as described above in Example 1.

In one embodiment, thiol and carboxyl surface functionalized nanoparticles may be deposited on a carbon structure. The carbon structure may be a porous or non-porous carbon structure. For microporous carbon structures, the microporous carbon structures may be impregnated with the thiol and carboxyl surface functionalized silver nanoparticles, as described by Example 2. The microporous carbon structures may include carbon black, carbon nanotubes, graphene, and the like.

The ink may then be prepared with the carbon supported thiol and carboxyl surface functionalized silver nanoparticles. In one embodiment, the microporous carbon structure impregnated with the thiol and carboxyl surface functionalized silver nanoparticles may be prepared as a catalyst ink that can be printed via a spray nozzle controlled by a printhead. For example, the catalyst ink can be sprayed onto the carbon substrate with the movable printhead. The catalyst ink can be formulated with toluene, as described above in Example 3.

At block 306, the method 300 deposits the ink on an electrically conductive surface. For example, the ink may be a catalyst ink. The catalyst ink can be sprayed or printed onto a carbon substrate. The catalyst ink can be printed in a serpentine pattern to evenly coat the substrate. In some embodiments, the ink may be deposited on a gas diffusion layer that allows gas to diffuse through the gas diffusion electrode.

The catalyst ink may be dried to form a gas diffusion electrode. In one embodiment, the catalyst ink can be dried at room temperature for 24 hours to form the gas diffusion electrode. The gas diffusion electrode may be assembled as part of a membrane assembly electrode that is deployed in a flow cell electro-catalytic converter. The gas diffusion electrode may perform conversion of CO₂ into CO and H₂, as described above. At block 308, the method 300 ends.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A composition, comprising:
carbon supported thiol and carboxyl surface functionalized silver nanoparticles.

2. The composition of claim 1, wherein a carbon support of the thiol and carboxyl surface functionalized silver nanoparticles comprises a porous carbon structure.

3. The composition of claim 2, wherein a single functional ligand comprises both a carboxyl containing moiety and a thiol containing moiety of the carbon supported thiol and carboxyl surface functionalized silver nanoparticles.

4. The composition of claim 3, wherein the single functional ligand comprises at least one of: a mercapto carboxylic acid, methyl thioglycolate, cysteine, or cystamine.

5. The composition of claim 4, wherein the mercapto carboxylic acid comprises at least one of: mercaptosuccinic acid, mercaptopropionic acid, 2-mercaptoethanol, 2-mercaptoethylacetate, 6-mercaptohexionicacid, or 10 mercaptodecionic acid.

6. The composition of claim 1, wherein the single functional ligand comprises mercaptosuccinic acid.

7. The composition of claim 5, wherein the carboxyl containing moiety and the thiol containing moiety are part of two separate functional ligands.

8. An ink composition, comprising:
carbon supported thiol and carboxyl surface functionalized silver nanoparticles;
water; and
a solvent.

9. The ink composition of claim 8, wherein the solvent comprises a polar solvent or a non-polar solvent.

10. The ink composition of claim 9, wherein the polar solvent comprises at least one of: ethanol, isopropanol, or butanol.

11. The ink composition of claim 9, wherein the non-polar solvent comprises at least one of: toluene, decalin, benzene, or hexane.

12. The ink composition of claim 8, wherein a solid concentration of the thiol and carboxyl surface functionalized silver nanoparticles in the water and solvent comprises approximately 0.1 weight percent to 5 weight percent.

13. The ink composition of claim 12, wherein the solid concentration of the carboxyl surface functionalized silver nanoparticles comprises approximately 0.34 weight percent.

14. The ink composition of claim 8, further comprising:
an ionomer solution.

15. The ink composition of claim 8, wherein the carbon supported thiol and carboxyl surface functionalized silver nanoparticles comprise a carboxyl containing moiety bonded to silver nanoparticles and a thiol containing moeity.

16. The ink composition of claim 15, wherein the carboxyl containing moiety and the thiol containing moiety are provided from a single functional ligand comprising at least one of: a mercapto carboxylic acid, methyl thioglycolate, or cysteine, cystamine.

17. An electrode, comprising:
an electrically conductive surface; and
carbon supported thiol and carboxyl surface functionalized silver nanoparticles on the electrically conductive surface.

18. The electrode of claim 17, further comprising:
a gas diffusion layer.

19. The electrode of claim 17, wherein the carbon supported thiol and carboxyl surface functionalized silver nanoparticles comprise a microporous carbon structure impregnated with thiol and carboxyl surface functionalized silver nanoparticles.

20. The electrode of claim 19, wherein the carboxyl surface functionalized silver nanoparticles comprise silver nanoparticles that are functionalized with a carboxyl containing moiety and a thiol moiety.
